# FASCICULE DE BREVET EUROPEEN

(11) **EP 1 605 235 B1**
(45) Date de publication et mention de la délivrance du brevet: **25.04.2012**
(21) Numéro de dépôt: 05291197.1
(22) Date de dépôt: 03.06.2005
(51) Int. Cl.: G01D 11/30, F16L 41/00, F16L 21/00, G05D 23/00, G05D 16/00

(54) **Procédé de montage d'un capteur dans un circuit hydraulique, et tube rigide dudit circuit équipé d'un tel capteur**
Montage eines Sensors in einem hydraulischen Stromkreis, Rohr mit integriertem Sensor
Mounting of a sensor in a hydraulic circuit, rigid pipe with said sensor

(30) Priorité: 11.06.2004 FR 0406328
(43) Date de publication de la demande: 14.12.2005
(73) Titulaire: HUTCHINSON, 75008 Paris (FR)
(72) Inventeur: Auclair, Alexandre, 45120 Chalette sur Loing (FR); Parodat, Pierre-Axel, 45700 Mormant-sur-Vernisson (FR); Gendrin, Stéphane, 45760 Borgny sur Bionne (FR)
(74) Mandataire: Bolinches, Michel Jean-Marie

(56) Documents cités:
- EP-A- 0 471 121
- EP-A- 0 585 465
- US-A- 3 760 842
- US-A- 3 934 605
- US-A- 5 231 867

## Description

L'invention concerne un procédé de montage d'un capteur dans un circuit hydraulique, en particulier un circuit de climatisation de véhicule automobile, ainsi qu'un tube rigide dudit circuit qui est équipé d'un tel capteur.

Un circuit de climatisation de véhicule automobile par exemple est un circuit fermé qui comprend plusieurs éléments, notamment un compresseur, un condenseur, un réservoir déshydratant, un système de détente, un évaporateur et parfois un tuyau, dans lesquels circule un fluide frigorigène. Tous ces éléments du circuit de climatisation sont reliés par des tubes rigides et/ou souples qui présentent vers chacune de leurs deux extrémités une connectique de fixation et de raccordement.

Par ailleurs, tout circuit de climatisation comprend également des capteurs de pression et/ou de température qui sont reliés à une unité de pilotage pour gérer le fonctionnement du circuit de climatisation. Actuellement, le montage d'un capteur s'effectue par piquage dans un des éléments constitutifs du circuit, le plus souvent dans un tube rigide du circuit, ce qui nécessite le perçage d'un trou dans l'élément, le plus souvent en aluminium, pour y engager une extrémité d'un support rigide du capteur.

La fixation de ce support, généralement en aluminium, se fait par une opération de brasage qui est délicate à réaliser car elle doit être parfaitement étanche sur toute la périphérie du trou percé dans l'élément du circuit hydraulique dans lequel il vient se fixer.

Un but de l'invention est de proposer une solution nouvelle pour le montage d'un capteur et dont l'originalité réside notamment dans l'absence de trou percé, en l'occurrence dans un tube rigide du circuit hydraulique pour y monter le capteur.

A cet effet, le montage de capteurs au voisinage de la connexion d'éléments du circuit est envisagé dans les documents US 5 231 867 et US 3 760 842.

A cet effet, l'invention propose un procédé de montage d'un capteur dans un circuit hydraulique tel un circuit de climatisation, ledit circuit comprenant au moins un tube rigide avec une connectique de fixation et de raccordement à au moins l'une de ses deux extrémités, qui est caractérisé en ce qu'il consiste à intégrer le capteur dans la connectique de fixation et de raccordement sans percer de trou dans le tube rigide pour y monter le capteur, la connectique de fixation et de raccordement sous la forme d'un boîtier en matière plastique qui, ,d'un côté, reçoit de manière étanche la partie d'extrémité du tube rigide et, de l'autre côté, se termine par un embout de raccordement, à prévoir dans le boîtier au moins un passage de dérivation pour amener une partie du fluide véhiculé par le tube rigide vers la chambre dans laquelle est logé le capteur, et à prévoir dans le boîtier un orifice apte à recevoir un moyen de fixation de la connectique de fixation de raccordement.

D'une manière générale, on réalise la connectique de fixation et de raccordement sous la forme d'un boîtier de préférence en matière plastique qui, d'un côté, reçoit de manière étanche la partie d'extrémité du tube rigide et, de l'autre côté, se termine par un embout de raccordement.

Selon un premier mode de réalisation du procédé de montage selon l'invention, on monte le capteur dans un logement interne ou chambre du boîtier, et on ferme la chambre par une plaque métallique ou en matière plastique percée d'un orifice dans lequel la partie d'extrémité du tube rigide est fixée de manière étanche.

Selon une variante de réalisation de ce premier mode de réalisation, on rapporte sur la partie d'extrémité libre du tube rigide une bride de renfort, habituellement métallique mais pouvant être constitué de tout autre matériau approprié (tel qu'un matériau plastique renforcé), la bride étant percée d'un premier trou pour le passage du tube rigide et d'un second trou de fixation axialement aligné avec un trou de fixation percé dans le boîtier qui est accolé à la bride de renfort, afin d'éviter le fluage dans le temps de la matière plastique du boîtier après sa fixation.

Selon un second mode de réalisation du procédé selon l'invention, on réalise le boîtier sous la forme d'un bloc avec un passage central et qui supporte à sa périphérie le capteur avec un passage radial percé dans le boîtier pour mettre en communication le capteur avec le passage central où circule le fluide.

On perce également dans le boîtier un orifice apte à recevoir un moyen de fixation de la connectique de fixation et de raccordement.

L'invention a également pour objet un tube rigide d'un circuit hydraulique, en particulier d'un circuit de climatisation, qui présente à au moins l'une de ses deux extrémités une connectique de fixation et de raccordement intégrant un capteur de pression ou de température pour la mise en oeuvre du procédé précité, ainsi qu'un circuit de climatisation équipé d'un tel tube rigide.

D'autres avantages, caractéristiques et détails de l'invention vont ressortir du complément de description qui va suivre en référence à des dessins annexés, donnés uniquement à titre d'exemple et dans lesquels :
- la figure 1 est une vue en perspective pour illustrer l'extrémité d'un tube rigide d'un circuit hydraulique avec sa connectique de fixation et de raccordement selon un premier mode de réalisation de l'invention ;
- les figures 2 à 4 sont des vues en perspective pour illustrer des détails de la connectique de fixation et de raccordement selon le premier mode de réalisation de l'invention ;
- la figure 5 est une vue en perspective d'une variante de réalisation du premier mode de réalisation de la figure 1 ;
- les figures 6a et 6b sont des demi-vues en coupe axiale partielle de la figure 5 pour illustrer deux variantes de réalisation ; et
- la figure 7 est une vue en coupe axiale d'une connectique de fixation et de raccordement selon un second mode de réalisation de l'invention.

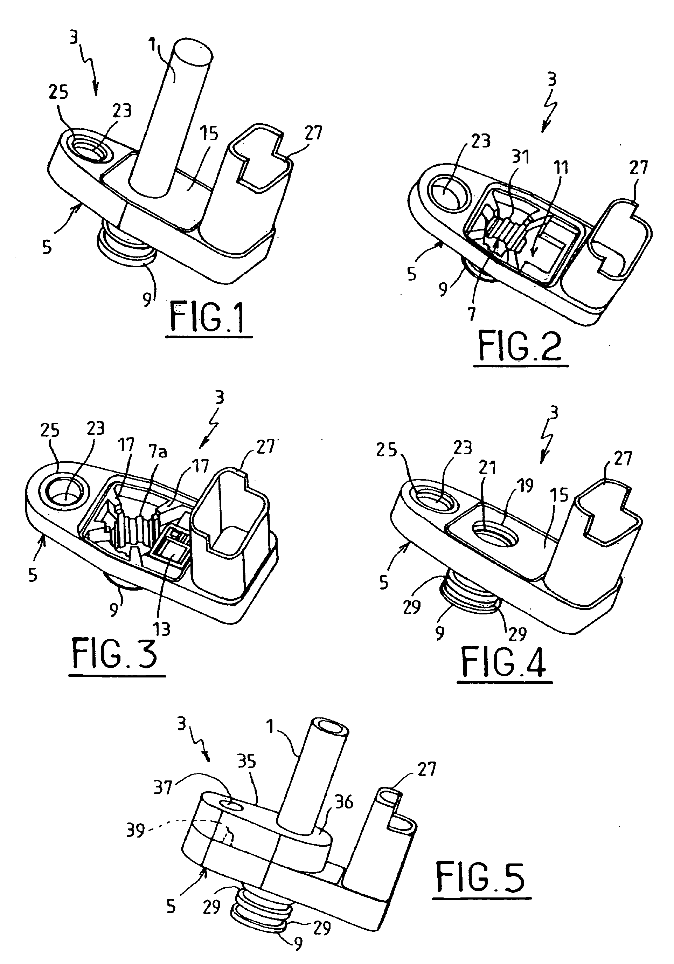

Sur la figure 1, on a illustré une extrémité d'un tube rigide 1 d'un circuit hydraulique, en particulier d'un circuit de climatisation de véhicule automobile, avec une connectique 3 de fixation et de raccordement monté à une extrémité du tube 1 et qui intègre un capteur de pression ou de température sans qu'il soit nécessaire de percer un trou dans le tube rigide 1 pour monter le capteur.

L'assemblage de la connectique 3 de fixation et de raccordement selon la figure 1 va être explicité ci-après en se reportant aux figures 2 à 4 pour illustrer un premier mode de réalisation de l'invention.

La connectique 3 de fixation et de raccordement est constitué par un boîtier 5 réalisé de préférence en une matière plastique et dont la forme est illustrée à la figure 2. Le boîtier 5 est percé par un orifice central 7 qui, d'un côté, est prolongé par un embout de raccordement 9 et, de l'autre côté, débouche dans un logement interne ou chambre 11 qui communique avec l'orifice central 7. Le capteur de pression ou de température 13 est monté et fixé dans la chambre 11 comme cela est illustré à la figure 3. La chambre 11 est fermée de manière étanche au moyen d'une plaque 15 formant capot (figure 4) qui prend appui sur des bossages 17 en saillie au fond de la chambre 11 (figure 3). La plaque, qui peut être métallique ou réalisée en matière plastique, est percée d'un orifice 19 axialement aligné avec l'orifice central 7 du boîtier 5. La plaque 15 a une épaisseur suffisante pour ménager dans son orifice 19 une gorge 21 apte à recevoir un joint torique d'étanchéité (figure 4). Vers une extrémité, le boîtier 5 est percé d'un orifice de fixation 23 (figures 1 à 4) qui peut recevoir un oeilleton métallique de renfort 25 (figures 3 et 4), et, vers son autre extrémité, une partie formant gaine 27 pour le passage des conducteurs électriques allant du capteur 13 vers une unité de pilotage (non représentée). L'embout de raccordement 9 du boîtier 5 présente au moins une gorge périphérique 29 apte à recevoir un joint torique d'étanchéité (figure 4).

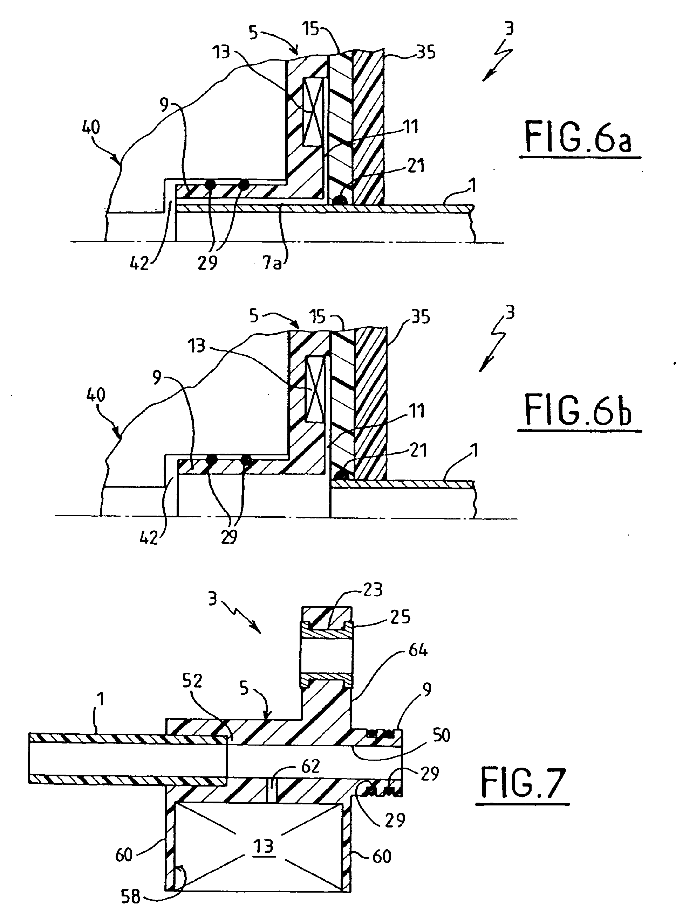

Ainsi, pour arriver à l'assemblage illustré à la figure 1, on prend le boîtier nu 5 de la figure 2, on monte le capteur 13 dans la chambre 11 du boîtier 5 (figure 3), on ferme la chambre 11 par la plaque 15 (figure 4), et on vient fixer le tube rigide 1 dans l'orifice 19 de la plaque 15, sachant que l'extrémité libre du tube rigide 1 peut pénétrer plus ou moins à l'intérieur du boîtier 5 comme cela sera explicité plus loin en référence aux figures 6a et 6b. La fixation du tube rigide 1 dans l'orifice 19 de la plaque 15 se fait d'une manière étanche par une opération connue en soi d'emmanchement, de matriçage, de dudgeonnage ou de rotation-fusion par exemple, l'étanchéité pouvant être éventuellement obtenue par la présence d'un joint torique dans la gorge 19 de l'orifice 21 de la plaque 15. Enfin, on engage la partie filetée d'un boulon par exemple dans l'orifice 23 du boîtier 5 pour fixer la connectique 3 de fixation et de raccordement sur un des éléments du circuit de climatisation.

Cependant, cette fixation intervenant au niveau d'un boîtier 5 en matière plastique, cette matière peut être amenée à fluer dans le temps et nuire à la bonne tenue de la fixation.

Aussi, pour pallier cet inconvénient et selon une variante de réalisation illustrée à la figure 5, on prévoit une bride de renfort métallique 35 formant une patte de fixation qui est percée d'un premier trou 36 traversé par la partie d'extrémité du tube rigide 1 qui est fixée à la pièce métallique 35 par une opération connue en soi de formage d'embout telle un matriçage, un dudgeonnage voire même un brasage par exemple, et par un second trou de fixation 37 qui est axialement aligné avec le trou de fixation 23 du boîtier 5 qui est rapporté contre la bride métallique 35. Pour pré-assembler ensemble le boîtier 5 et la bride métallique 35, on peut par exemple prévoir un téton de positionnement 39 solidaire du boîtier 5 et qui pénètre dans un trou borgne de la bride métallique 35.

Le tube rigide 1 avec sa connectique 3 de fixation et de raccordement vient ensuite se raccorder sur un embout femelle 40 du circuit de climatisation comme cela est schématiquement illustré aux figures 6a et 6b qui sont des demi-coupes axiales de la figure 5. L'embout femelle 40 présente une cavité 42 apte à recevoir l'embout de raccordement 9 du boîtier 5, le boîtier 5 venant en appui sur l'embout femelle 40. D'une manière générale, le capteur 13 n'étant pas monté dans l'axe de l'orifice central 7 du boîtier 5, il faut prévoir une dérivation du fluide transporté par le tube rigide 1 pour l'amener jusqu'au capteur 13, et la réalisation de cette dérivation est fonction du degré d'enfoncement du tube rigide 1 dans le boîtier 5.

Dans l'exemple de réalisation de la figure 6a, le tube rigide 1 est introduit dans le boîtier 5 jusqu'à pénétrer dans l'embout de raccordement 9. Dans ce cas, la dérivation du fluide est assurée par au moins une cannelure 7a usinée dans l'orifice central 7 et qui forme un passage apte à dériver une partie du fluide, en entrée ou en sortie du tube rigide 1, vers la chambre 11 pour atteindre le capteur 13. En supposant que le capteur 13 soit un capteur de pression, sa membrane va être déformée par la pression du fluide et les déformations vont être transformées en signaux électriques qui vont être transmises à la centrale de pilotage.

Dans l'exemple de réalisation de la figure 6b, le tube rigide 1 est introduit dans le boîtier 5 mais sans pénétrer à l'intérieur de l'embout 9, son extrémité libre ne débordant pas de la plaque 15 du boîtier 5. Dans ce cas, la dérivation du fluide est directement assurée par la chambre 11 du boîtier 5 dans lequel est logé le capteur 13.

Selon un autre mode de réalisation illustré de manière schématique à la figure 7, la connectique 3 de fixation et de raccordement est formée d'un boîtier 5 qui est fixé directement à une extrémité du tube rigide 1 mais avec un capteur 13 positionné autrement.

Plus précisément, ce boîtier 5 qui peut être réalisée également en matière plastique présente un corps tubulaire percé d'un orifice central 50 de passage du fluide. Vers une extrémité de la pièce, l'orifice central 50 a un diamètre élargi à peine supérieur au diamètre externe du tube rigide 1, et délimite un épaulement 52 formant butée pour l'extrémité du tube rigide 1 engagée dans l'orifice central 50. La fixation du tube rigide 1 dans l'orifice central 50 peut s'effectuer de manière étanche au moyen d'une colle ou par une opération de rotation-fusion par exemple. Vers son autre extrémité, le boîtier 5 forme un embout de raccordement 9 avec au moins une gorge périphérique 29 apte à recevoir un joint torique pour assurer l'étanchéité. A sa surface périphérique, le boîtier 5 comprend un logement 58 délimité par au moins deux parois radiales 60 et apte à recevoir le capteur 13 qui est mis en communication avec le fluide par un canal radial 62 ménagé dans l'épaisseur du boîtier 5 et qui communique avec l'orifice central 50. A sa surface périphérique, le boîtier 5 comprend également un bossage radialement externe formant une patte de fixation 64 percée d'un orifice 23 pour le passage d'une vis et ou de la tige d'un boulon par exemple. Un oeilleton métallique 25 peut être monté dans l'orifice 66 pour assurer une meilleure fixation de la connectique 3 de fixation et de raccordement.

La présente invention n'est pas limitée aux exemples de réalisation décrits et représentés. Ainsi, l'embout 9 peut être un embout mâle comme illustré ci-dessus, mais peut être alternativement un embout femelle lorsque l'embout de réception du circuit de climatisation est un embout mâle.

Plus généralement, l'embout 9 est apte à s'insérer dans tout élément du circuit de climatisation, le compresseur, le condenseur, un réservoir déshydratant, le système de détente, l'évaporateur ou un tuyau, reliés par des tubes rigides et/ou souples.

Par ailleurs, l'orifice 19 de la plaque 15 peut présenter un profil de conformation plus élaborée qu'une conformation simplement tubulaire, afin de pouvoir fixer un tube 1 à embout pilote, à collerette, de type encliquetable ou autre qui présente la conformation complexe complémentaire.

D'une manière générale, l'invention s'applique à tout circuit hydraulique et ne se limite pas à un circuit de climatisation pour véhicule automobile.

## Revendications

1. Procédé de montage d'un capteur (13) dans un circuit hydraulique tel un circuit de climatisation, ledit circuit comprenant au moins un tube rigide (1) avec une connectique (3) de fixation et de raccordement à au moins l'une de ses deux extrémités, **caractérisé en ce qu'**il consiste à intégrer le capteur (13) dans la connectique (3) de fixation et de raccordement sans percer de trou dans le tube rigide (1) pour y monter le capteur (13), à réaliser la connectique (3) de fixation et de raccordement sous la forme d'un boîtier (5) en matière plastique qui, d'un côté, reçoit de manière étanche la partie d'extrémité du tube rigide (1) et, de l'autre côté, se termine par un embout de raccordement (9), à prévoir dans le boîtier (5) au moins un passage de dérivation (7a, 11, 62) pour amener une partie du fluide véhiculé par le tube rigide (1) vers une chambre (11, 58) du boîtier dans laquelle est logé le capteur (13), et à prévoir dans le boîtier (5) un orifice de fixation (23) apte à recevoir un moyen de fixation de la connectique (3) de fixation et de raccordement.

2. Procédé de montage selon la revendication 1, dans lequel on ferme la chambre (11) où est logé le capteur (13) par une plaque (15) percée d'un orifice (19) dans lequel la partie d'extrémité du tube rigide (1) est fixée de manière étanche.

3. Procédé de montage selon la revendication 1, dans lequel on rapporte sur la partie d'extrémité libre du tube rigide (1) une bride de renfort (35) percée d'un premier trou (36) pour le passage du tube rigide (1) et d'un second trou de fixation (37) axialement aligné avec ledit orifice de fixation (23) percé dans le boîtier (5) qui est accolé à la bride de renfort (35).

4. Procédé de montage selon la revendication 1, dans lequel on réalise le boîtier (5) sous la forme d'un bloc avec un passage central (50) et qui supporte à sa périphérie le capteur (13) avec un passage radial (62) qui est percé dans le boîtier (5) et qui forme ledit au moins un passage de dérivation (62) pour mettre en communication le capteur (13) avec le passage central (50) où circule le fluide.

5. Tube rigide pour circuit hydraulique, en particulier pour circuit de climatisation de véhicule automobile, comprenant une connectique (3) de fixation et de raccordement à l'une de ses extrémités, et qui est équipé d'un capteur (13) de pression ou de température, **caractérisé en ce que** le capteur (13) est intégré dans la connectique (3) de fixation et de raccordement, et dans lequel la connectique (3) de fixation et de raccordement est constituée par 'un' boîtier (5) qui reçoit de manière étanche la partie d'extrémité du tube rigide (1), qui se termine par un embout de raccordement (9), et qui présente au moins un passage de dérivation (7a, 11, 62) pour amener une partie du fluide véhiculé par le tube rigide (1) vers un logement ou chambre (11, 58) du boîtier (5) dans lequel est logé le capteur (13), et qui présente un orifice de fixation (23) apte à recevoir un moyen de fixation de la connectique (3) de fixation et de raccordement.

6. Tube rigide selon la revendication 5, dans lequel la chambre (11) est fermée de manière étanche par une plaque (15) qui est percée d'un orifice (19) dans lequel le tube rigide (1) est fixé par une opération d'emmanchement, de matriçage, de dudgeonnage ou de rotation-fusion.

7. Tube rigide selon la revendication 5 ou 6, dans lequel le boîtier (5) est percé d'un orifice central (7) qui débouche dans la chambre (11) où est logé le capteur (13), et dans lequel le passage de dérivation est formé par au moins une rainure (7a) usinée dans l'orifice central (7) au niveau de l'embout de raccordement (9), lorsque l'extrémité libre du tube rigide (1) pénètre au moins en partie dans l'embout de raccordement (9).

8. Tube rigide selon la revendication 7, dans lequel le passage de dérivation est formé par la chambre (11) lorsque l'extrémité libre du tube rigide (1) ne pénètre pas dans l'embout de raccordement (9).

9. Tube rigide selon la revendication 5, dans lequel le boîtier (5) est réalisé en matière plastique, et dans lequel une bride de renfort (35) est fixée autour du tube rigide (1) et contre laquelle vient en appui le boîtier (5), ladite bride étant percée d'un orifice de fixation (37) axialement aligné avec ledit orifice de fixation (23) du boîtier (5).

10. Tube rigide selon la revendication 5, dans lequel le boîtier (5) est un bloc percé d'un orifice central (50) qui reçoit, d'un côté et d'une manière étanche ladite partie d'extrémité du tube rigide (1) et qui, de l'autre côté, se termine par ledit embout de raccordement (9), et dans lequel le boîtier (5) supporte extérieurement le capteur (13) qui communique avec l'orifice central (50) par un passage radial (62) qui est ménagé dans le boîtier (5) et qui forme ledit au moins un passage de dérivation (62).

11. Tube rigide selon la revendication 10, dans lequel le boîtier (5) comprend également une bride de renfort (64) percée dudit orifice de fixation (23) pour le passage d'un élément de fixation.

12. Circuit hydraulique, en particulier un circuit de climatisation pour véhicule automobile, comprenant notamment un tube rigide (1) avec à l'une de ses deux extrémités une connectique (3) de fixation et de raccordement, et un capteur (13) de pression ou de température, **caractérisé en ce que** le capteur (13) est intégré dans la connectique (3) de fixation et de raccordement selon l'une des revendications 5 à 11.

## Claims

1. A method for fitting a sensor (13) in a hydraulic circuit such as an air conditioning circuit, the said circuit comprising at least one rigid pipe (1) with a fixing and connecting system (3) at at least one of its two ends, **characterised in that** it consists in integrating the sensor (13) in the fixing and connecting system (3) without drilling a hole in the rigid pipe (1) in order to fit the sensor (13) there, in producing the fixing and connecting system (3) in the form of a casing (5) made of plastic which, on one side, receives in a fluid-tight manner the end part of the rigid pipe (1) and, on the other side, is terminated by a connecting end-piece (9), in providing in the casing (5) at least one tapping passage (7a, 11, 62) for taking a portion of the fluid conveyed by the rigid pipe (1) toward a chamber (11, 58) of the casing in which the sensor (13) is housed, and in providing in the casing (5) a fixing aperture (23) capable of receiving a means of fixing the fixing and connecting system (3).

2. The fitting method as claimed in claim 1, wherein the chamber (11) in which the sensor (13) is housed is closed by a plate (15) pierced with an aperture (19) in which the end part of the rigid pipe (1) is fixed in a fluid-tight manner.

3. The fitting method as claimed in claim 1, wherein there is added to the free end part of the rigid pipe (1) a reinforcement flange plate (35) pierced with a first hole (36) for the passage of the rigid pipe (1) and with a second fixing hole (37) axially aligned with said fixing hole (23) pierced in the casing (5) which is joined against the reinforcement flange plate (35).

4. The fitting method as claimed in claim 1, wherein the casing (5) is made in the form of a block with a central passage (50) and which supports the sensor (13) on its periphery with a radial passage (62) pierced in the casing (5) to connect the sensor (13) with the central passage (50) in which the fluid flows.

5. A rigid pipe for a hydraulic circuit, in particular for an air conditioning circuit of a motor vehicle, comprising a fixing and connecting system (3) at one of its ends, and which is provided with a pressure or temperature sensor (13), **characterised in that** the sensor (13) is integrated in the fixing and connecting system (3) and wherein the fixing and connecting system (3) consists of a casing (5) which receives in a fluid-tight manner the end part of the rigid pipe (1), which is terminated by a connecting end-piece (9) and which has at least one tapping passage (7a, 11, 62) to take a portion of the fluid conveyed by the rigid pipe (1) toward a housing or chamber (11, 58) of the casing (5) in which the sensor (13) is housed, and which has a fixing aperture (23) capable of receiving a means of fixing the fixing and connecting system (3).

6. The rigid pipe as claimed in claim 5, wherein the chamber (11) is closed in a fluid-tight manner by a plate (15) which is pierced with an aperture (19) in which the rigid pipe (1) is fixed by an operation of force fitting, dying, tube expansion or rotation-fusion.

7. The rigid pipe as claimed in claim 5 or 6, wherein the casing (5) is pierced with a central aperture (7) which emerges into the chamber (11) where the sensor (13) is housed, and wherein the tapping passage is formed by at least one groove (7a) machined in the central aperture (7) at the level of the connecting end-piece (9), when the free end of the rigid pipe (1) penetrates at least partially into the connecting end-piece (9).

8. The rigid pipe (1) as claimed in claim 7, wherein the tapping passage is formed by the chamber (11) when the free end of the rigid pipe (1) does not penetrate into the connecting end-piece (9).

9. The rigid pipe (1) as claimed in claim 5, wherein the casing (5) is made of plastic, and wherein a reinforcement flange plate (35) is fixed around the rigid pipe (1) and against which the casing (5) bears, the said flange plate being pierced with a fixing aperture (37) axially aligned with said aperture (23) of the casing (5).

10. The rigid pipe (1) as claimed in claim 5, wherein the casing (5) is a block pierced by a central aperture (50) which receives, on one side and in a fluid-tight manner, the end part of the rigid pipe (1) and which, on the other side, is terminated by said connecting end-piece (9), and wherein the casing (5) externally supports the sensor (13) which connects with the central aperture (50) by a radial passage (62)which is formed in the casing (5) and which forms said at least one tapping passage (62).

11. The rigid pipe (1) as claimed in claim 10, wherein the casing (5) also comprises a reinforcement flange plate (64) pierced by said aperture (23) for the passage of a fixing element.

12. A hydraulic circuit, in particular an air conditioning circuit of a motor vehicle, comprising in particular a rigid pipe (1) with, at one of its two ends, a fixing and connecting system (3) and a pressure or temperature sensor (13), **characterised in that** the sensor (13) is integrated in the fixing and connecting system (3) as claimed in one of claims 5 to 11.

## Patentansprüche

1. Verfahren zur Montage eines Sensors (13) in einem Hydraulikkreis, wie z.B. einer Klimaanlage, wobei der Kreis zumindest ein starres Rohr (1) mit einer Verbindungstechnik (3) zur Befestigung und zum Anschluss an zumindest den einen von zwei Endabschnitten aufweist, **dadurch gekennzeichnet, dass** dieses darin besteht, den Sensor (13) in die Verbindungstechnik (3) zur Befestigung und zum Anschluss zu integrieren, ohne dass ein Loch in das starre Rohr (1) eingebracht wird, um dort den Sensor (13) zu montieren, die Verbindungstechnik (3) zur Befestigung und zum Anschluss in Form eines Gehäuses (5) aus Plastikmaterial umzusetzen, das von einer Seite in dichter Weise den Endabschnitt des starren Rohres (1) aufnimmt und von der anderen Seite in einem Anschlussstück (9) endet, in dem Gehäuse (5) zumindest einen Ableitungskanal (7a, 11, 62) vorzusehen, um einen Teil des Fluids, das durch das starre Rohr (1) transportiert wird, zu einer Kammer (11, 58) des Gehäuses hin zu führen, in der der Sensor (13) untergebracht ist, und in dem Gehäuse (5) eine Befestigungsöffnung (23) vorzusehen, die in der Lage ist, eine Befestigungseinrichtung der Verbindungstechnik (3) zur Befestigung und zum Anschluss aufzunehmen.

2. Verfahren zur Montage nach Anspruch 1, wobei die Kammer (11), in der der Sensor (13) untergebracht ist, durch eine Platte (15) geschlossen ist, die von einer Öffnung (19) durchdrungen ist, in der der Endabschnitt des starren Rohres (1) in dichter Weise befestigt ist.

3. Verfahren zur Montage nach Anspruch 1, wobei an dem freien Endabschnitt des starren Rohres (1) ein Verstärkungsflansch (35) angebracht ist, der von einem ersten Loch (36) zum Hindurchgehen des starren Rohres (1) und von einem zweiten Befestigungsloch (37) durchdrungen ist, das mit der Befestigungsöffnung (23) axial ausgerichtet ist, die in das Gehäuse (5) eingebracht ist, das mit dem Verstärkungsflansch (35) verbunden ist.

4. Verfahren zur Montage nach Anspruch 1, wobei das Gehäuse (5) in Form eines Blocks mit einem mittleren Kanal (50) umgesetzt ist, der an seinem Umfang den Sensor (13) stützt, mit einem radialen Kanal (62), der in das Gehäuse (5) eingebracht ist und der den zumindest einen Ableitungskanal (62) bildet, um den Sensor (13) mit dem mittleren Kanal (50), in dem das Fluid zirkuliert, in Verbindung zu bringen.

5. Starres Rohr für einen Hydraulikkreis, insbesondere für eine Fahrzeugklimaanlage, mit einer Verbindungstechnik (3) zur Befestigung und zum Anschluss an dem einen seiner Endabschnitte ausgerüstet mit einem Temperatur- oder Drucksensor (13), **dadurch gekennzeichnet, dass** der Sensor (13) in die Verbindungstechnik (3) zur Befestigung und zum Anschluss integriert ist, und wobei die Verbindungstechnik zur Befestigung und zum Anschluss durch ein Gehäuse (5) gebildet ist, das in dichter Weise den Endabschnitt des starren Rohres (1) aufnimmt, der in einem Anschlussstück (9) endet, und das zumindest einen Ableitungskanal (7a, 11, 62) aufweist, um einen Teil des Fluids, das durch das starre Rohr (1) transportiert wird, zu einer Aufnahme oder Kammer (11, 58) des Gehäuses (5) hin zu führen, in der der Sensor (13) untergebracht ist, und das eine Befestigungsöffnung (23) aufweist, die in der Lage ist, eine Befestigungseinrichtung der Verbindungstechnik (3) zur Befestigung und zum Anschluss aufzunehmen.

6. Starres Rohr nach Anspruch 5, wobei die Kammer (11) in dichter Weise durch eine Platte (15) geschlossen ist, die von einer Öffnung (19) durchdrungen ist, in der das starre Rohr (1) durch einen Aufsteckvorgang, einen Gesenkformvorgang, einen Bördelvorgang oder einen Rotationsschmelzvorgang befestigt ist.

7. Starres Rohr nach Anspruch 5 oder 6, wobei das Gehäuse (5) von einer mittleren Öffnung (7) durchdrungen ist, die in der Kammer (11), in der der Sensor (13) untergebracht ist, mündet und wobei der Ableitungskanal durch zumindest eine Nut (7a) gebildet ist, die in die mittlere Öffnung (7) auf der Höhe des Anschlussstücks (9) eingearbeitet ist, wenn der freie Endabschnitt des starren Rohres (1) zumindest teilweise in das Anschlussstück (9) eindringt.

8. Starres Rohr nach Anspruch 7, wobei der Ableitungskanal durch die Kammer (11) gebildet ist, wenn der freie Endabschnitt des starren Rohres (1) in das Anschlussstück (9) nicht eindringt.

9. Starres Rohr nach Anspruch 5, wobei das Gehäuse (5) aus Plastikmaterial umgesetzt ist und wobei ein Verstärkungsflansch (35) um das starre Rohr (1) herum befestigt ist, und wobei gegen diesen das Gehäuse (5) drückt, wobei der Flansch von einer Befestigungsöffnung (37) durchdrungen ist, die mit der Befestigungsöffnung (23) des Gehäuses (5) axial ausgerichtet ist.

10. Starres Rohr nach Anspruch 5, wobei das Gehäuse (5) ein Block ist, der von einer mittleren Öffnung (50) durchdrungen ist, die von einer Seite in dichter Weise den Endabschnitt des starren Rohres (1) aufnimmt und von der anderen Seite in dem Anschlussstück (9) endet, und wobei das Gehäuse (5) außen den Sensor (13) stützt, der mit der mittleren Öffnung (50) durch einen Radialkanal (62) kommuniziert, der in dem Gehäuse (5) angeordnet ist und der den zumindest einen Ableitungskanal (62) bildet.

11. Starres Rohr nach Anspruch 10, wobei das Gehäuse (5) ebenfalls einen Verstärkungsflansch (64) aufweist, der von der Befestigungsöffnung (23) durchdrungen ist, damit ein Befestigungselement hindurchgeht.

12. Hydraulikkreis, insbesondere eine Fahrzeugklimaanlage, der insbesondere ein starres Rohr (1) mit einer Verbindungstechnik (3) zur Befestigung und zum Anschluss an dem einen seiner zwei Enden und einen Druck- oder Temperatursensor (13) aufweist, **dadurch gekennzeichnet, dass** der Sensor (13) in die Verbindungstechnik (3) zur Befestigung und zum Anschluss nach einem der Ansprüche 5 bis 11 integriert ist.
